# DEMANDE DE BREVET EUROPEEN

(11) **EP 0 732 524 A1**
(43) Date de publication de la demande: **18.09.1996**
(21) Numéro de dépôt: 96104240.5
(22) Date de dépôt: 18.03.1996
(51) Int. Cl.: F16F 15/123, F16F 15/12

(54) **Amortisseur de torsion**

(30) Priorité: 17.03.1995 FR 9503123
(71) Demandeur: VALEO, 75017 Paris (FR)
(72) Inventeur: Lefevre, Gérard, 80480 Saleux (FR); Morel, Dominique, 02500 Luzoir/Hirson (FR)
(74) Mandataire: Gamonal, Didier

(57) **Abrégé**

Amortisseur de torsion, notamment pour embrayage de véhicule automobile, comportant des parties coaxiales (A,B,C) montées rotatives, un préamortisseur (18) agencé entre le voile de moyeu (11) et le moyeu (10) et un palier (50) : la première partie coaxiale (A) comporte un moyeu (10), la seconde partie coaxiale (B) un voile de moyeu (11) et la troisième partie coaxiale (C) deux rondelles de guidage (12A,12B) disposées de part et d'autre du voile de moyeu (11) ; le préamortisseur (18) comprend un voile secondaire (40) entre deux flasques (31,32) et des moyens élastiques à action circonférentielle (35) intercalés entre le voile secondaire (40) et les flasques (31, 32); le palier (50) est en contact avec friction d'une part avec l'une des rondelles de guidage (12A) et d'autre part avec une portée complémentaire ménagée à l'extérieur du moyeu (10) ; le palier (50) est solidaire de l'un des flasques (31) du préamortisseur (18).

## Description

La présente invention concerne un amortisseur de torsion comportant des parties coaxiales montées rotatives l'une par rapport à l'autre à l'encontre de moyens de frottement à action axiale, de centrage et élastiques interposés circonférentiellement entre elles. La présente invention concerne plus particulièrement les moyens de centrage qui permettent de palier des défauts d'alignement des axes de deux de ces parties rotatives.

Dans un amortisseur de torsion du type désigné ci-dessus, formant par exemple friction d'embrayage de véhicule automobile, l'une des parties coaxiales rotatives est constituée pour l'essentiel par deux rondelles de guidage disposées de part et d'autre d'un voile de moyeu, constituant une seconde partie coaxiale, l'une des rondelles de guidage portant un disque de friction destiné à être solidarisé en rotation avec un premier arbre, en pratique un arbre menant tel que le vilebrequin du moteur. Une troisième partie rotative comporte un moyeu par lequel elle est destinée à être solidarisée en rotation avec un deuxième arbre, en pratique un arbre mené tel que l'arbre d'entrée d'une boîte de vitesses, dans le cas envisagé. Des moyens élastiques à action circonférentielle sont interposés entre le voile du moyeu et les rondelles de guidage. Ils forment un amortisseur principal. Un préamortisseur est également souvent interposé entre le moyeu et le voile de moyeu. Il comprend des moyens élastiques à action circonférentielle de plus faible raideur que ceux de l'amortisseur principal, intervenant circonférentiellement entre deux flasques, de plus petit diamètre que les rondelles de guidage, couplés au voile de moyeu et un voile secondaire fixé au moyeu.

Pour faire face aux défauts d'alignement des axes de la rondelle de guidage portant le disque de friction et du moyeu, il est connu d'agencer un palier conique ou arrondi en contact, avec friction, avec une portée de forme complémentaire ménagée à l'extérieur du moyeu. Une rondelle de frottement est par ailleurs intercalée entre la face intérieure de la rondelle de guidage et le flasque adjacent du préamortisseur.

La présente invention a pour but de proposer une construction permettant de simplifier le montage d'un amortisseur de torsion du type indiqué ci-dessus.

Elle propose un amortisseur de torsion, notamment pour embrayage de véhicule automobile, comportant
- des parties coaxiales montées rotatives, une première partie coaxiale comportant un moyeu, une seconde partie coaxiale un voile de moyeu et une troisième partie coaxiale deux rondelles de guidage disposées de part et d'autre du voile de moyeu,
- un préamortisseur, agencé entre le voile de moyeu et le moyeu, comprenant un voile secondaire entre deux flasques et des moyens élastiques à action circonférentielle intercalés entre lesdits flasques, et
- un palier soit conique soit arrondi en contact avec friction d'une part avec l'une desdites rondelles de guidage et d'autre part avec une portée complémentaire ménagée à l'extérieur du moyeu, caractérisé en ce que ledit palier est solidaire de l'un des flasques dudit préamortisseur.

Grâce à l'invention, on réalise un sous-ensemble comprenant un préamortisseur et un palier. On simplifie donc le montage, puisqu'il suffit d'enfiler le palier sur le moyeu. Il n'est par ailleurs plus nécessaire de sertir le voile secondaire du préamortisseur au moyeu.

Cette construction permet également de mieux recentrer le voile de moyeu.

D'autres caractéristiques et avantages de l'invention ressortiront d'ailleurs de la description qui va suivre, à titre d'exemple, en référence aux dessins sur lesquels :
- la figure 1 est une vue partielle en coupe d'un dispositif amortisseur de torsion suivant un exemple de réalisation de l'invention ;
- la figure 2 est une vue de détail agrandi de la figure 1 ; et
- les figures 3 et 4 sont des vues similaires à la figure 2 montrant deux autres modes de réalisation possible de l'invention.

Ces figures illustrent à titre d'exemple l'application de l'invention à un dispositif amortisseur de torsion, qui, destiné à constituer une friction d'embrayage pour embrayage de véhicule automobile, comporte, successivement montées rotatives deux à deux les unes par rapport aux autres, trois parties coaxiales d'axe commun x-x, à savoir, une partie A, constituée pour l'essentiel par un moyeu 10, une partie B, constituée pour l'essentiel par un voile de moyeu 11, qui entoure le moyeu 10, et une partie C, constituée pour l'essentiel par deux rondelles de guidage 12A, 12B, disposées de part et d'autre du voile de moyeu 11 et entourant le moyeu 10, liées l'une à l'autre par des colonnettes 9, et donc animées du même mouvement de rotation. Les colonnettes 9 traversent à jeu circonférentiel des ouvertures pratiquées à la périphérie externe du voile 11.

La partie coaxiale C porte un disque de friction 13, dont les garnitures de frottement sont destinées, de manière connue, à être serrées entre deux plateaux liés en rotation à un arbre menant, l'arbre de sortie du moteur dans le cas concerné d'un véhicule automobile.

Le moyeu 10 présente quant à lui des cannelures intérieures 14, destinées à le solidariser à un arbre mené en rotation, l'arbre d'entrée de la boîte de vitesses associée, dans le cas d'un tel véhicule automobile.

Les parties coaxiales B et C sont montées rotatives l'une par rapport à l'autre, à l'encontre de moyens élastiques interposés circonférentiellement entre elles, constitués, dans la forme de réalisation représentée, par des ressorts 15, 15a du type ressorts à boudin montés dans des fenêtres pratiquées en vis-à-vis dans le voile 11 et les rondelles de guidage 12A, 12B. L'ensemble ainsi constitué par les parties coaxiales B, C et les ressorts 15, 15a constitue un amortisseur principal de la friction d'embrayage. Son fonctionnement, bien connu par lui-même, ne sera pas décrit plus en détail et ne relève pas de la présente invention.

Un agencement de frottement sec à action axiale est disposé entre les parties B et C, comprenant une rondelle Belleville 43 intercalée sous contrainte entre une rondelle d'appui 42 et la rondelle de guidage 12B. Une rondelle de frottement 44 est intercalée entre la rondelle d'appui 42 et le voile 11.

Les parties coaxiales A et B sont elles aussi montées rotatives l'une par rapport à l'autre, à l'encontre de moyens élastiques de préamortissement et de centrage, dans les limites d'un débattement angulaire déterminé par des moyens d'engrènement à jeu 16 comportant des dentures intérieures 17 ménagées sur le voile du moyeu 11 coopérant avec des dentures extérieures 18 du moyeu 10.

Le dispositif est complété par un préamortisseur comprenant notamment une cassette de préamortissement 18 agencée entre le voile de moyeu 11 et le moyeu 10 dans les limites de leur débattement angulaire déterminé par les moyens d'engrènement à jeu 16. Cette cassette montée en dessous des ressorts 15, 15a est située dans un plan décalé de celui du voile 11, selon la direction axiale en étant montée axialement entre le voile 11 et la rondelle de guidage 12A. Elle est constituée par un voile secondaire 40 et par deux flasques 31 et 32 situés de part et d'autre du voile secondaire 40 et raccordés au voile de moyeu 11 par des doigts 33. Les doigts 33 étant engagés dans des fenêtres 34 du voile de moyeu 11, les flasques 31 et 32 sont entraînés en rotation avec le voile de moyeu 11. Des ressorts 35 à action circonférentielle, de plus faible raideur que les ressorts 15, 15a, sont intercalés entre les flasques 31, 32, d'une part, et le voile secondaire 40 solidaire en rotation du moyeu 10, d'autre part, selon une disposition classique par sertissage sur les dentures 18 du moyeu 10 de hauteur réduite à ce endroit. Ils sont donc sollicités élastiquement par une rotation relative du voile de moyeu 11 et du moyeu 10 et tendent à s'opposer à cette rotation en étant montés dans des fenêtres pratiquées en vis-à-vis dans les flasques 31,,32 et le voile 40. Une rondelle de frottement 41 est intercalée entre la cassette de préamortissement et le voile de moyeu 11.

Des moyens de centrage des parties coaxiales A et C sont prévus comportant un palier conique 50 en matière synthétique qui s'étend dans le prolongement du flasque 31 de la cassette de préamortissement 18. Ce palier est, selon l'invention, solidarisé ici par surmoulage au flasque 31. Il est intercalé avec friction entre une portée conique 52 complémentaire ménagée à l'extérieur (à la périphérie externe) du moyeu 10 et une portée conique complémentaire 53 ménagée en regard à l'extrémité de la rondelle de guidage 12A portant le disque de friction 13. D'autre part, une rondelle de friction 54 est intercalée entre la face intérieure de cette rondelle de guidage 12A et le flasque adjacent 31 de la cassette de préamortissement, en sorte qu'un jeu existe ici entre le palier 50 et la portion 50. Bien entendu en supprimant la rondelle 54, la portée 53 vient en contact avec le palier 50.

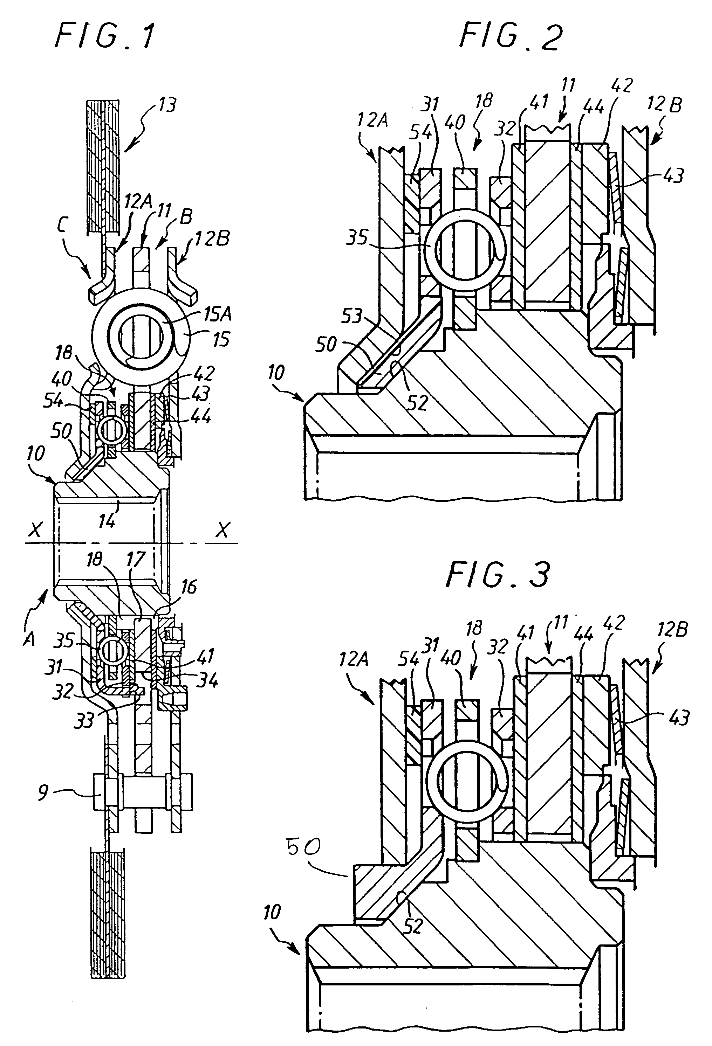

Selon une variante de réalisation possible, comme illustré à la figure 3, on réalise une pièce unique formant le flasque 31 et le palier 50 et, par ailleurs, le contact à friction entre la rondelle de guidage 12A et le palier 50 s'opère non plus sur une portée conique mais perpendiculairement à l'axe x-x.

Selon une autre variante possible, le palier et les portées complémentaires ménagées sur le moyeu et la rondelle de guidage sont de forme arrondie.

Pour mémoire, on rappellera que la rondelle d'appui 42 présente des pions engagés dans des trous de la rondelle de guidage 12B (figure 1) pour sa liaison en rotation avec ladite rondelle 12B.

La rondelle 42 entoure une seconde rondelle de frottement (non référencée) soumise à l'action d'une seconde rondelle Belleville (non référencée). Cette seconde rondelle de frottement est calée en rotation sur la rondelle de guidage 12B. Plus précisément, ladite rondelle de frottement présente des pions engagés dans des ouvertures complémentaires de ladite rondelle 12B.

Ainsi, lors du mouvement relatif entre le disque 13 et le moyeu 10, dans une première phase, les rondelles de guidage 12A, 12B forment un bloc avec le voile 11 du fait de la raideur des ressorts 15A, 15B. Un mouvement relatif se produit alors entre la portée 52 et le palier 50, ainsi qu'entre la seconde rondelle de frottement et le moyeu 10. Durant cette phase, les ressorts 35 sont comprimés. Après annulation du jeu des moyens d'engrènement à jeu le voile 11 devient solidaire en rotation du moyeu 10, les ressorts 35 restent bandés et un mouvement relatif se produit entre le voile 11 et les rondelles de guidage 12A, 12B. Lors de cette seconde phase, un mouvement relatif se produit entre le palier 50 et la rondelle de guidage 12A, ainsi qu'entre la rondelle 42 et le voile 11. Ces frottements sont tarés par la rondelle 43. De même, la seconde rondelle Belleville tare le frottement intervenant entre le palier 50 et la portée 52. On notera que les rondelles 54, 41, 44 évitent des frottements métal sur métal.

On appréciera que, grâce au palier 50 et au flasque 31, on assure à la fois le centrage des rondelles de guidage 12A, 12B et le centrage du voile 11 par rapport au moyeu 10. En effet, le flasque 31, grâce à ces doigts 33, en prise avec les ouvertures 34 du voile 11, assure le centrage du voile 11 par rapport au moyeu 10. Par son palier 50, le flasque 31 assure le centrage de la rondelle de guidage 12A par rapport au moyeu 10.

Ici les doigts 33 du flasque 31 traversent à jeu de montage des échancrures complémentaires pratiquées à la périphérie externe du flasque 32, en sorte que ledit flasque 32 est lié, par coopération de formes, au flasque 31, les doigts 33 étant en forme de pattes à section rectangulaire et les échancrures du flasque 32 ouvertes radialement avec deux flancs latéraux coopérant avec les flancs latéraux des doigts 33.

Ces doigts 33 présentent à leur extrémité libre un embouti laissant intact les bords latéraux des doigts 33. L'embouti coopère avec la face du flasque 32 tournée vers la rondelle 41. Ainsi, l'assemblage du flasque 31 avec le flasque 32 se fait par clipsage, les ressorts 35 faisant entretoise entre les flasques 31, 32.

Grâce à cette disposition, le voile 40, comportant de manière connue en soi à sa périphérie externe une denture engrenant sans jeu avec la denture extérieure 18 du moyeu 10, peut être fixé par sertissage sur le moyeu 10 en étant calé axialement par un épaulement que présente la denture 18 et un rabattement de matière. Après sertissage du voile 40 et montage des ressorts 35, on assemble par clipsage les flasques 31, 32 pour formation d'un sous-ensemble moyeu 10 - cassette de préamortissement 18.

Avec le mode de réalisation de la figure 2, on peut réaliser la cassette 18, enfiler le voile 40 sur la denture 18, procéder au sertissage puis rapporter le palier 50.

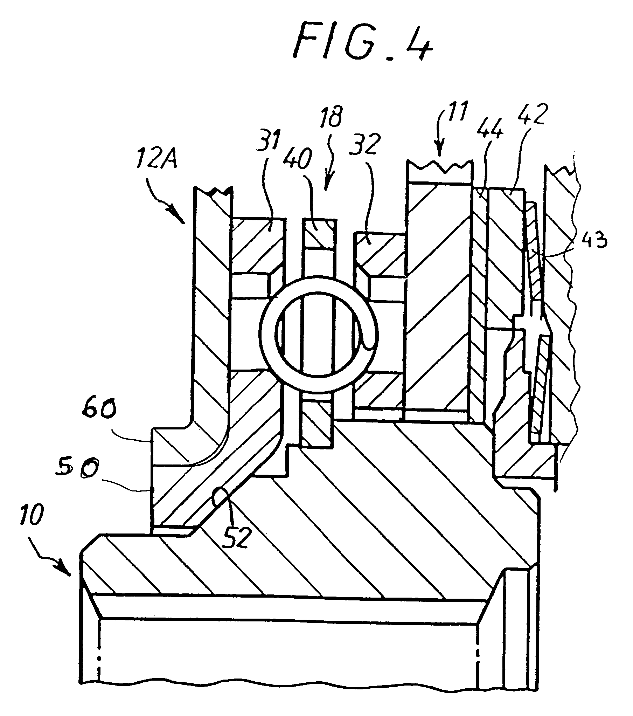

Bien entendu la présence des rondelles 54 et 41 n'est pas indispensable. Ainsi à la figure 4 les flasques 31 et 32 sont en matière synthétique et le flasque 31 est, comme à la figure 3, d'un seul tenant avec le palier 50. La rondelle de guidage 12 présente à sa périphérie interne un rebord annulaire 60 d'orientation axiale en contact avec la périphérie externe cylindrique du palier 50.

De préférence les flasques sont en matière synthétique moulable.

Les flasques 31,32 sont admis à frotter directement contre respectivement la rondelle de guidage 12 et le voile 11.

Ainsi, lors de la première phase précitée, un frottement se produit entre le voile 11 et le flasque 32.

Lors de la seconde phase précitée un frottement se produit entre le flasque 31 et la rondelle de guidage 12A.

Cette solution est économique car elle conduit à une réduction des pièces de l'amortisseur de torsion. En outre la réalisation par moulage des flasques 31 et 32 est aisée.

## Revendications

1. Amortisseur de torsion, notamment pour embrayage de véhicule automobile, comportant
- des parties coaxiales (A,B,C) montées rotatives, une première partie coaxiale (A) comportant un moyeu (10), une seconde partie coaxiale (B) un voile de moyeu (11) et une troisième partie coaxiale (C) deux rondelles de guidage (12A,12B) disposées de part et d'autre du voile de moyeu (11),
- un préamortisseur (18) agencé entre le voile de moyeu (11) et le moyeu (10) comprenant un voile secondaire (40) entre deux flasques (31,32) et des moyens élastiques à action circonférentielle (35) intercalés entre le voile secondaire (40) et lesdits flasques, et
- un palier (50) soit conique soit arrondi en contact avec friction d'une part avec l'une desdites rondelles de guidage (12A) et d'autre part avec une portée complémentaire (52) ménagée à l'extérieur du moyeu (10), caractérisé en ce que ledit palier (50) est solidaire de l'un des flasques (31) du préamortisseur (18).

2. Amortisseur selon la revendication 1, caractérisé par une rondelle de frottement (54) disposée entre ladite rondelle de guidage (12A) et ledit flasque adjacent (31) dudit préamortisseur (18).

3. Amortisseur selon la revendication 1 ou 2, caractérisé en ce que ledit palier (50) est solidarisé par surmoulage dans le prolongement dudit flasque (31) dudit préamortisseur (18).

4. Amortisseur selon la revendication 1 ou 2, caractérisé par une pièce unique formant ledit palier (50) et ledit flasque (31) dudit préamortisseur (18).

5. Amortisseur selon l'une quelconque des revendications précédentes, caractérisé en ce que ledit palier (50) est intercalé avec friction entre ladite portée (52) du moyeu (10) et une portée de forme complémentaire (53) audit palier ménagée sur ladite rondelle de guidage (12A).

6. Cassette de préamortissement comportant deux flasques (31,32) disposés de part et d'autre d'un voile et des moyens élastiques à action circonférentielle (35) intercalés entre ledit voile secondaire et lesdits flasques, caractérisée en ce qu'un palier (50) soit arrondi soit conique est solidarisé à l'un des flasques (31).

7. Cassette selon la revendication 6, caractérisée en ce que ledit flasque (31) auquel est solidarisé le palier (50) présente des doigts de fixation (33).

8. Cassette selon la revendication 6 ou 7, caractérisée en ce que ledit palier (50) est solidarisé par surmoulage dans le prolongement dudit flasque (31).

9. Cassette selon l'une quelconque des revendications 6 à 8, caractérisée par une pièce unique formant ledit flasque (31) et ledit palier (50).
